# EUROPÄISCHE PATENTANMELDUNG

(11) **EP 3 641 259 A1**
(43) Veröffentlichungstag der Anmeldung: **22.04.2020**
(21) Anmeldenummer: 18200362.4
(22) Anmeldetag: 15.10.2018
(51) Int. Cl.: H04L 29/06, H04L 29/08, G06F 21/10, G06F 21/12

(54) **VORRICHTUNG UND VERFAHREN ZUR PRÜFUNG VON EIGENSCHAFTEN VON RESSOURCEN**

(71) Anmelder: Siemens Aktiengesellschaft, 80333 München (DE)
(72) Erfinder: Eckl, Roland, 91301 Forchheim (DE)

(57) **Zusammenfassung**

Es wird eine Prüfvorrichtung zur Prüfung von Eigenschaften von Ressourcen eines Web-Servers vorgeschlagen, welche eine Berechnungs-Einheit zum Berechnen eines eine bestimmte Ressource identifizierenden Identifikators unter Verwendung der bestimmten Ressource, eine Feststellungs-Einheit zum Feststellen einer Lizenz-Pflicht für die bestimmte Ressource unter Verwendung des berechneten Identifikators, und eine Ermittlungs-Einheit zum Ermitteln einer vorhandenen Lizenz für den Web-Server bei einer für die bestimmte Ressource festgestellten Lizenz-Pflicht unter Verwendung des berechneten Identifikators umfasst.

Hierdurch ist ein nicht autorisiertes Aufbringen einer bestimmten Ressource auf einen Web-Server in einfacher Weise feststellbar und unterbindbar.

Ferner werden ein Computerprogrammprodukt sowie ein Verfahren vorgeschlagen.

## Beschreibung

Die vorliegende Erfindung betrifft eine Prüfvorrichtung, ein Verfahren sowie ein Computerprogrammprodukt zur Prüfung von Eigenschaften von Ressourcen.

Das technische Gebiet der Erfindung betrifft die Prüfung von Eigenschaften von Ressourcen, insbesondere die Prüfung von Eigenschaften von Ressourcen auf einem Web-Server.

Anwendungen (Programme) oder Applikationen für die Nutzung in einem Browser werden immer verbreiteter, da der Zugriff durch beliebige Geräte, wie beispielsweise einen Computer, ein Tablet oder ein Smartphone, unabhängig von dessen Betriebssystem durch einen Benutzer erfolgen kann.

Diesbezüglich werden immer mehr Teile der Anwendung client-seitig - also direkt im Browser - ausgeführt. Dabei spricht man von sogenannten "Single page applications" (SPA), welche eine größere Anwendung realisieren, ohne dass dabei vom Benutzer verschiedene Einzelseiten aufgerufen werden müssen.

Nachteilig ist hierbei, dass der Programmcode der Anwendung (Programmcode des Programms) erst zur Laufzeit interpretiert wird und keinem richtigen Kompilierschritt unterliegt und darüber hinaus direkt beim Nutzer ausgeführt wird. Der Programmcode der Anwendung kann somit relativ einfach kopiert und in einer vergleichbaren Umgebung, wie beispielsweise auf einem anderen Web-Server, zur Verfügung gestellt werden.

Da der Programmcode der Anwendung nicht in Maschinencode kompiliert werden kann, sind einfache Laufzeittests leicht manipulierbar.

Somit kann eine Zugriffsabfrage an einen Web-Server auf den Programmcode einer Anwendung dahingehend manipuliert werden, dass das Ergebnis, immer "wahr" lautet. Dies würde bedeuten, dass einer anfragenden Instanz, welche zuvor die Zugriffsanfrage manipuliert hat, ein Zugriff auf den Programmcode der Anwendung erlaubt wird, obwohl der anfragenden Instanz der Zugriff auf den Programmcode der Anwendung potentiell verwehrt ist.

Um diese Art der Manipulation zu verhindern, sind aus dem Stand der Technik mehrere Methoden bekannt. Bei einer ersten Methode behält die Anwendung einen signifikanten Anteil ihres Programmcodes im Web-Server, also im Backend, welcher nicht einfach mitkopiert werden kann. Ohne den richtigen Web-Server (und dessen Lizenzierung) bleibt eine Kopie des Client-Anteils dabei nutzlos.

Eine weitere Methode ist, dass die zur Ausführung der Anwendung relevanten Daten im Web-Server bleiben, und nicht client-seitig abgespeichert werden. Die Anwendung bleibt somit relativ nutzlos, wenn sie keine relevanten Daten beziehen kann. Ohne Lizenz oder Rechte kann der Benutzer die notwendigen Daten nicht in die Anwendung beziehungsweise das Programm laden.

Jedoch gibt es Fälle, bei denen eine Anwendung selbst keinen Web-Server-Anteil aufweisen soll, vor allem wegen der dadurch deutlich höheren Komplexität des Systems hinsichtlich der Bereitstellung und Synchronisation der einzelnen Komponenten untereinander.

Ein Fall ist beispielsweise die Verwendung einer Speicherprogrammierbaren Steuerung (SPS, PLC, "Programmable Logic Controller"). Dabei kann der Programmcode der Anwendung (das Programm) ein lizenzpflichtiges Add-On sein, welches nicht standardmäßig zum Auslieferungszustand der SPS gehört und beispielsweise auf einem Web-Server abgelegt sein kann.

Falls der Benutzer der SPS eine gültige Lizenz besitzt, könnte er auf den Programmcode der Anwendung über den Web-Server zugreifen und den Programmcode der Anwendung auf die SPS aufbringen bzw. downloaden und lokal auf dem zu der SPS gehörigen Speicher speichern.

Im Detail bedeutet das, dass der Benutzer, wenn er die notwendige Freischaltung für den Programmcode der Anwendung einmal, selbst wenn es temporär ist, erhalten hat, auf den Programmcode von lizenzpflichtigen Anwendungen zugreifen kann, diese herunterladen und andernorts gerätelokal ablegen kann, wo er dann die entsprechenden Schreibrechte besitzt, um den Programmcode der Anwendung weiterverwenden zu können.

Ohne das Vorhandensein einer zusätzlichen Lizenz kann der Benutzer nun den heruntergeladenen Programmcode der Anwendung einfach auf beliebig viele weitere Web-Server weiterer SPS ablegen. Somit könnten die SPS über den jeweiligen weiteren zugehörigen Web-Server den Programmcode der Anwendung beziehen, ohne dass der Benutzer für diese eine gültige Lizenz aufweisen muss.

Vor diesem Hintergrund besteht eine Aufgabe der vorliegenden Erfindung darin, die Prüfung von Eigenschaften von Ressourcen zu verbessern.

Gemäß einem ersten Aspekt wird eine Prüfvorrichtung zur Prüfung von Eigenschaften von Ressourcen eines Web-Servers mit einer Berechnungs-Einheit zum Berechnen eines eine bestimmte Ressource identifizierenden Identifikators unter Verwendung der bestimmten Ressource, einer Feststellungs-Einheit zum Feststellen einer Lizenz-Pflicht für die bestimmte Ressource unter Verwendung des berechneten Identifikators, und einer Ermittlungs-Einheit zum Ermitteln einer vorhandenen Lizenz für den Web-Server bei einer für die bestimmte Ressource festgestellten Lizenz-Pflicht unter Verwendung des berechneten Identifikators vorgeschlagen.

Die Prüfvorrichtung erlaubt es, in einfacher Art und Weise ein nicht autorisiertes Aufbringen von einer bestimmten Ressource auf einen Web-Server festzustellen und zu unterbinden.

Die Prüfvorrichtung erlaubt es weiterhin, einen nicht autorisierten Zugriff von einem Client oder einem weiteren Web-Server auf eine bestimmte Ressource auf dem Web-Server festzustellen und zu unterbinden.

Durch die Prüfvorrichtung ist es außerdem vorteilhafterweise möglich, geringfügige Änderungen an der bestimmten Ressource auf dem Web-Server festzustellen.

Durch die vorgeschlagene Prüfvorrichtung ist es möglich, dass eine bestimmte lizenzpflichtige Ressource sicher und zuverlässig durch den identifizierenden Identifikator identifiziert werden kann. In Verbindung mit der Feststellungs-Einheit und der Ermittlungs-Einheit führt dies zu dem technischen Effekt, dass eine Weiterverbreitung und ein Aufbringen einer bereits von dem Web-Server heruntergeladenen bestimmten Ressource auf den weiteren Web-Server unterbunden werden kann. Zudem kann auch der Versuch einer nicht autorisierten Aufbringung auf den Web-Server festgestellt werden. Somit kann also die bestimmte Ressource geschützt werden, die rein client-seitig angewendet wird, für eine bestimmte Umgebung konzipiert ist, wie zum Beispiel eine SPS in Verbindung mit einem Web-Server und welche nicht alleine durch eine Serverabhängigkeit vollständig geschützt werden kann.

Zusätzlich wird durch die vorgeschlagene Prüfvorrichtung ein Zugriff von dem Client und/oder dem weiteren Web-Server auf die bestimmte Ressource bei nicht Vorhandensein einer Lizenz verhindert. Dies erhöht die Zugriffssicherheit für die jeweilige Ressource und somit die Sicherheit der lizenzierten Anwendung. Somit verringern sich durch die erhöhte Sicherheit die Wartungskosten des Systems, da nicht autorisierte Zugriffe leichter festgestellt und unterbunden werden können. Weiterhin können, falls ein nicht autorisierter Zugriff auf die bestimmte Ressource stattgefunden hat, kleinere Änderungen, wie beispielsweise Pfad-Anpassungen oder Auskommentierungen von Kontroll-Funktionen innerhalb der bestimmten Ressource erkannt werden.

Die jeweilige Einheit, zum Beispiel die Berechnungs-Einheit oder die Feststellungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Eine erste Eigenschaft der bestimmten Ressource ist das Bestehen einer Lizenz-Pflicht für die bestimmte Ressource.

Eine zweite Eigenschaft der bestimmten Ressource ist das Vorhandensein einer Lizenz des Web-Servers für die die Lizenz-Pflicht aufweisende bestimmte Ressource.

Die Erklärungen für die bestimmte Ressource gelten analog auch für die Ressourcen, insbesondere in der nachfolgenden Beschreibung.

Gemäß einer Ausführungsform ist die bestimmte Ressource als eine Datei ausgebildet, wobei die Datei als eine ausführbare Datei und/oder als eine Informationsdatei und/oder als eine Bilddatei ausgebildet ist.

Die Ressource ist insbesondere eine Datei, vorzugsweise eine ausführbare Datei.

Eine ausführbare Datei, auch als Programmdatei bezeichnet, ist eine Datei, die als Computerprogramm ausgeführt werden kann. Ein Computerprogramm oder ein Programm ist eine Abfolge von Anweisungen, um bestimmte Funktionen und/oder Aufgaben mithilfe eines Computers zu bearbeiten oder zu lösen. Eine ausführbare Datei ist beispielsweise eine CAD-Software, ein Betriebssystem, eine Skript-Datei oder dergleichen.

Eine Bilddatei ist eine Datei, in der zumindest ein digitales Bild gespeichert ist. Das digitale Bild ist beispielsweise urheberrechtlich geschützt.

Gemäß einer weiteren Ausführungsform ist die Berechnungs-Einheit dazu eingerichtet, den die bestimmte Ressource identifizierenden Identifikator derart zu berechnen, dass der identifizierende Identifikator als Hashwert ausgebildet ist.

Gemäß einer weiteren Ausführungsform ist die Berechnungs-Einheit dazu eingerichtet, den Hashwert als den die bestimmte Ressource identifizierenden Identifikator über die bestimmte Ressource zu berechnen.

Eine Datei (bestimmte Ressource) weist einen oder mehrere identifizierende Identifikatoren auf, welche die Datei eindeutig kennzeichnen. Ein solcher Identifikator ist beispielsweise ein individueller Teil der Datei. Der Identifikator kann ferner auch für verschiedene Versionen der Datei definiert werden.

Ein Hashwert stellt ein Ergebnis dar, welches mittels einer Hashfunktion berechnet wurde. Ein Hashwert ist insbesondere ein codiertes Ergebnis einer uncodierten bestimmten Ressource. Die Berechnungs-Einheit berechnet somit mittels einer Hashfunktion einen Hashwert von der am Eingang der Hashfunktion bereitgestellten bestimmten Ressource. Dieser Hashwert ist dann der die bestimmte Ressource eindeutig identifizierende Identifikator.

Die Feststellungs-Einheit ist dazu eingerichtet, festzustellen, ob die Datei einer Lizenz-Pflicht unterliegt. Hierbei vergleicht die Feststellungs-Einheit, ob der Hashwert (identifizierender Identifikator) beispielsweise in einer Liste und/oder Tabelle und/oder dergleichen enthalten ist, in welcher lizenzpflichtige Dateien aufgelistet sind. Falls der Hashwert der Datei in dieser Liste oder Tabelle aufgelistet ist, unterliegt die Datei einer Lizenz-Pflicht. Falls der Hashwert nicht in dieser Liste und/oder Tabelle und/oder dergleichen aufgeführt ist, unterliegt die Datei keiner Lizenz-Pflicht.

Die Liste oder Tabelle ist beispielsweise auf dem Web-Server gespeichert und/oder auf einem Computer mit einer SpeicherEinheit gespeichert, auf den der Web-Server Zugriff hat.

Lizenz-Pflicht einer Datei bedeutet insbesondere, dass zur Ausführung und/oder Veränderung und/oder zum Zugriff auf die Datei, der auf die Datei zugreifende Benutzer eine Lizenz für die Datei benötigt.

Gemäß einer weiteren Ausführungsform ist die Berechnungs-Einheit dazu eingerichtet, die Berechnung des die bestimmte Ressource identifizierenden Identifikators mittels eines Distanz-Verfahrens zu berechnen, bei welchem eine Distanz zwischen durch die Berechnungs-Einheit berechneten Hashwerten von Ressourcen berechnet wird.

Da Hashwerte zwar eindeutig für eine Datei sind, aber bereits bei minimaler Veränderung der Datei abweichen, wird ein Distanz-Verfahren verwendet.

Das Distanz-Verfahren ist beispielsweise "Locality-Sensitive Hashing" (LSH) oder "MinHash".

Die Distanz entspricht einem Grad einer Ähnlichkeit zweier Hashwerte von zwei Dateien. Bei dem Distanz-Verfahren wird also der Grad der Ähnlichkeit (Distanz) zweier Dateien berechnet. Je größer die Distanz zwischen zwei Dateien ist, desto unähnlicher sind sie sich und desto größer ist somit deren Abweichung zueinander. Mit anderen Worten, je größer die Distanz ist, desto stärker unterscheiden sich die Dateien. Umgekehrt, je geringer die Distanz ist, desto ähnlicher sind sich die Dateien.

Gemäß einer weiteren Ausführungsform ist die Prüfvorrichtung dazu eingerichtet, die Prüfung der Eigenschaften von Ressourcen des Web-Servers zu unterschiedlichen Zeitpunkten durchzuführen, wobei als ein Zeitpunkt die Prüfung bei einer Zugriffsanfrage erfolgt und/oder als ein weiterer Zeitpunkt die Prüfung zu einem festgelegten Zeitpunkt erfolgt und/oder als ein weiterer Zeitpunkt die Prüfung bei einem Gerätestart erfolgt und/oder als ein weiterer Zeitpunkt die Prüfung Ereignis getriggert erfolgt.

Gemäß einer weiteren Ausführungsform ist die Prüfvorrichtung dazu eingerichtet, die Prüfung durchzuführen, falls die Zugriffsanfrage eines weiteren Web-Servers und/oder eines Clients auf die bestimmte Ressource erfolgt.

Gemäß einer weiteren Ausführungsform ist die Prüfvorrichtung dazu eingerichtet, die Prüfung durchzuführen, falls eine Anfrage des weiteren Webservers und/oder des Clients zum Aufbringen und/oder zum Speichern von der bestimmten Ressource auf den Webserver erfolgt.

Das Aufbringen ist insbesondere so definiert, dass der weitere Web-Server und/oder der Client die bestimmte Ressource auf den Web-Server aufbringen und/oder speichern und/oder ablegen will.

Gemäß einer weiteren Ausführungsform ist die Ermittlungs-Einheit dazu eingerichtet, eine erste Aktion des Web-Servers bei einer ermittelten vorhandenen Lizenz zu triggern und eine zweite Aktion des Web-Servers bei einer ermittelten nicht-vorhandenen Lizenz zu triggern.

Gemäß einem zweiten Aspekt wird ein Web-Server mit einer Prüfvorrichtung vorgeschlagen.

Hierzu umfasst der Web-Server die Prüfvorrichtung, welche gemäß dem ersten Aspekt oder einer der Ausführungsformen des ersten Aspekts ausgebildet ist.

Gemäß einer Ausführungsform ist die Ermittlungs-Einheit dazu eingerichtet, eine erste Aktion des Web-Servers bei einer ermittelten vorhandenen Lizenz zu triggern und eine zweite Aktion des Web-Servers bei einer ermittelten nicht-vorhandenen Lizenz zu triggern, wobei der Web-Server dazu eingerichtet ist, die erste Aktion durchzuführen, wobei die erste Aktion eine Erlaubnis für einen Zugriff auf die bestimmte Ressource und/oder ein Aufbringen und/oder ein Speichern der bestimmten Ressource umfasst.

Gemäß einer weiteren Ausführungsform ist der Web-Server dazu eingerichtet, die zweite Aktion durchzuführen, wobei die zweite Aktion ein Erteilen keiner Erlaubnis für einen Zugriff auf die bestimmte Ressource und/oder ein Löschen der bestimmten Ressource und/oder ein Sperren der bestimmten Ressource umfasst.

Die Distanz des oben erwähnten Distanz-Verfahrens wird beispielsweise mittels eines bestimmten Schwellwerts berechnet.

Unterschreitet die Distanz, also das Ergebnis der Berechnung oder des Vergleichs zweier Hashwerte von zwei Dateien den bestimmten Schwellwert, liegt eine Lizenz-Pflicht für die bestimmte Ressource vor. Wenn nun zusätzlich zur unterschrittenen Distanz durch die Ermittlungs-Einheit ermittelt wird, dass der Web-Server keine Lizenz für die bestimmte Ressource aufweist, wird vom Web-Server die zweite Aktion ausgeführt.

Hierbei kann die zweite Aktion zum Löschen oder Sperren der Datei führen oder zu einer Nutzerwarnung.

Die Ermittlungs-Einheit, welche überprüft, ob die lizenzpflichtige Datei, die auf den Web-Server abgelegt werden soll, dort abgelegt werden darf, hat vorzugsweise Zugriff auf eine Sammlung von Hashwerten (Identifikatoren) in einer Liste oder Tabelle oder dergleichen, welche Auskunft darüber gibt, ob der Web-Server die benötigte Lizenz aufweist.

Es gilt insbesondere die Anzahl von hinterlegten Hashwerten (Sammlung von Hashwerten, Identifikatoren) auf dem Web-Server möglichst gering zu halten. Dies gilt vor allem hinsichtlich des Distanz-Verfahrens, damit bei einer Berechnung einer Distanz möglichst wenige hinterlegte Hashwerte von Identifikatoren mit der anfragenden bestimmten Ressource abgeglichen und geprüft werden müssen.

Hierzu werden einige Möglichkeiten vorgeschlagen. Es können beispielsweise mittels eines Ausschlussverfahrens nur die Identifikatoren verglichen werden, welche für die jeweilige bestimmte Ressource benötigt werden. Somit werden bestimmte Identifikatoren, welche nicht anwendungsrelevant sind, gar nicht erst für das Distanz-Verfahren verwendet und der Berechnungsaufwand verringert sich.

Weiterhin werden nur Identifikatoren für bestimmte Ressourcen miteinbezogen, die eine bestimmte Mindestgröße oder bestimmte Dateiendungen aufweisen. Dies senkt die Anzahl der Hashwerte, welche auf einem Gerät, beispielsweise dem Web-Server, abzuspeichern sind. Wenn beispielsweise die bestimmte Ressource eine Mindestgröße von 1MB aufweist, können Identifikatoren, die für Dateien hinterlegt sind, welche lediglich 1KB aufweisen, von vornherein ausgeschlossen werden. Das gleiche Prinzip gilt für Dateiendungen.

Ein Zeitpunkt der Prüfung ist beispielsweise, wenn eine Zugriffsanfrage erfolgt. Eine Zugriffsanfrage kann von dem weiteren Webserver oder von dem Client erfolgen. Bei der Zugriffsanfrage kann es sich um einen Zeitpunkt bei einem Download der bestimmten Ressource durch den Client oder den weiteren Web-Server handeln.

Ein weiterer Zeitpunkt der Prüfung ist beispielsweise, wenn ein Gerät gestartet werden soll. Hierbei dient die Prüfung als Vorbedingung, um festzustellen, ob der Benutzer die Lizenz vorweisen kann, damit das Gerät gestartet werden kann. Ansonsten verweigert der Besitzer der Lizenz den Gerätestart.

Ein weiterer Zeitpunkt der Prüfung ist beispielsweise, wenn ein vorbestimmtes Ereignis, zum Beispiel ein Quality-Gate, auftritt oder ein beliebiger vorheriger festgelegter Zeitpunkt erreicht wird.

Ein weiterer Zeitpunkt der Prüfung ist beispielsweise eine Prüfung, welche parallel zum regulären Betrieb unter minimalem Ressourcen-Verbrauch stattfindet. Als Auslöser (Trigger) dieser Prüfung können beispielsweise der Gerätestart oder ein vorbestimmter Zeitpunkt festgelegt werden.

Gemäß einem dritten Aspekt wird ein System mit einer Prüfvorrichtung und mit einem zu der Prüfvorrichtung externen Web-Server vorgeschlagen, welches gemäß dem ersten Aspekt oder einer der Ausführungsformen des ersten Aspekts ausgebildet ist.

Gemäß einem vierten Aspekt wird ein Verfahren zur Prüfung von Eigenschaften von Ressourcen eines Web-Servers vorgeschlagen, welches die Schritte umfasst: Berechnen eines eine bestimmte Ressource identifizierenden Identifikators unter Verwendung der bestimmten Ressource, Feststellen einer Lizenz-Pflicht für die bestimmte Ressource unter Verwendung des berechneten Identifikators, und Ermitteln einer vorhandenen Lizenz für den Web-Server bei einer für die bestimmte Ressource festgestellten Lizenz-Pflicht unter Verwendung des berechneten Identifikators.

Gemäß einem fünften Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockdiagramm eines Ausführungsbeispiels einer Prüfvorrichtung zur Prüfung von Eigenschaften von Ressourcen;
Fig. 2 zeigt ein schematisches Blockdiagramm eines Ausführungsbeispiels eines Web-Servers mit einer Prüfvorrichtung;
Fig. 3 zeigt ein schematisches Blockdiagramm eines Ausführungsbeispiels eines Systems mit einer Prüfvorrichtung und einem Web-Server; und
Fig. 4 zeigt ein schematisches Ablaufdiagramm eines Ausführungsbeispiels eines Verfahrens zur Prüfung von Eigenschaften von Ressourcen.

In den Figuren sind gleiche oder funktionsgleiche Elemente mit denselben Bezugszeichen versehen worden, sofern nichts anderes angegeben ist.

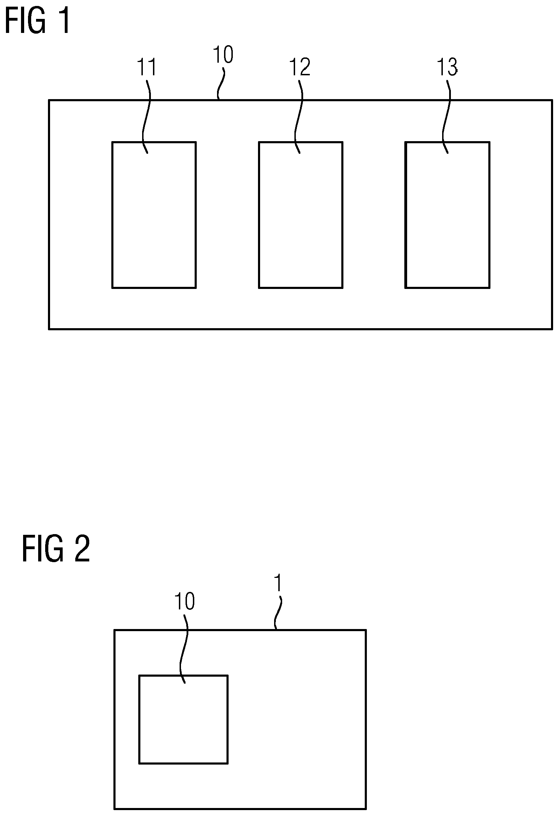

Fig. 1 zeigt schematisches Blockdiagramm eines Ausführungsbeispiels einer Prüfvorrichtung 10 zur Prüfung von Eigenschaften von Ressourcen eines Web-Servers 1.
Die Prüfvorrichtung 10 der Fig. 1 umfasst eine Berechnungs-Einheit 11, eine Feststellungs-Einheit 12 und eine Ermittlungs-Einheit 13.

Die Berechnungs-Einheit 11 ist dazu eingerichtet, einen eine bestimmte Ressource identifizierenden Identifikator unter Verwendung der bestimmten Ressource zu berechnen.

Die Feststellungs-Einheit 12 ist dazu eingerichtet, eine Lizenz-Pflicht für die bestimmte Ressource unter Verwendung des berechneten Identifikators festzustellen.

Weiterhin ist die Ermittlungs-Einheit 13 dazu eingerichtet, eine vorhandene Lizenz für den Web-Server 1 bei einer für die bestimmte Ressource festgestellten Lizenz-Pflicht unter Verwendung des berechneten Identifikators zu ermitteln.

Dabei ist die bestimmte Ressource vorzugsweise als eine Datei ausgebildet, wobei die Datei als eine ausführbare Datei und/oder als eine Informationsdatei und/oder als eine Bilddatei ausgebildet ist.

Weiterhin ist die Berechnungs-Einheit 11 dazu eingerichtet, den die bestimmte Ressource identifizierenden Identifikator derart zu berechnen, dass der identifizierende Identifikator als Hashwert ausgebildet ist.

Die Berechnungs-Einheit 11 ist ferner dazu eingerichtet, den Hashwert als den die bestimmte Ressource identifizierenden Identifikator über die bestimmte Ressource zu berechnen.

Ebenso ist die Berechnungs-Einheit 11 dazu eingerichtet, die Berechnung des die bestimmte Ressource identifizierenden Identifikators mittels eines Distanz-Verfahrens zu berechnen, bei welchem eine Distanz zwischen durch die Berechnungs-Einheit 11 berechneten Hashwerten von Ressourcen berechnet wird.

Weiterhin ist die Prüfvorrichtung 10 dazu eingerichtet, die Prüfung der Eigenschaften von Ressourcen des Web-Servers 1 zu unterschiedlichen Zeitpunkten durchzuführen, wobei als ein Zeitpunkt die Prüfung bei einer Zugriffsanfrage erfolgt und/oder als ein weiterer Zeitpunkt die Prüfung zu einem festgelegten Zeitpunkt erfolgt und/oder als ein weiterer Zeitpunkt die Prüfung bei einem Gerätestart erfolgt und/oder als ein weiterer Zeitpunkt die Prüfung Ereignis getriggert erfolgt.

Die Prüfvorrichtung 10 ist ebenfalls dazu eingerichtet, die Prüfung durchzuführen, falls die Zugriffsanfrage eines weiteren Web-Servers und/oder eines Clients auf die bestimmte Ressource erfolgt.

Ergänzend ist Prüfvorrichtung 10 dazu eingerichtet, die Prüfung durchzuführen, falls eine Anfrage des weiteren Webservers und/oder des Clients zum Aufbringen und/oder zum Speichern von der bestimmten Ressource auf den Webserver 1 erfolgt.

Ferner ist die Ermittlungs-Einheit 13 dazu eingerichtet, eine erste Aktion des Web-Servers 1 bei einer ermittelten vorhandenen Lizenz zu triggern und eine zweite Aktion des Web-Servers 1 bei einer ermittelten nicht-vorhandenen Lizenz zu triggern.

Fig. 2 zeigt ein schematisches Blockdiagramm eines Ausführungsbeispiels eines Web-Servers 1 mit einer Prüfvorrichtung 10.

Hierbei umfasst der Web-Server 1 die Prüfvorrichtung 10 der Fig. 1.

Dabei ist die Ermittlungs-Einheit 13 dazu eingerichtet, eine erste Aktion des Web-Servers 1 bei einer ermittelten vorhandenen Lizenz zu triggern und eine zweite Aktion des Web-Servers 1 bei einer ermittelten nicht-vorhandenen Lizenz zu triggern, wobei der Web-Server 1 dazu eingerichtet ist, die erste Aktion durchzuführen, wobei die erste Aktion eine Erlaubnis für einen Zugriff auf die bestimmte Ressource und/oder ein Aufbringen und/oder ein Speichern der bestimmten Ressource umfasst.

Ergänzend ist der Web-Server 1 dazu eingerichtet, die zweite Aktion durchzuführen, wobei die zweite Aktion ein Erteilen keiner Erlaubnis für einen Zugriff auf die bestimmte Ressource und/oder ein Löschen der bestimmten Ressource und/oder ein Sperren der bestimmten Ressource umfasst.

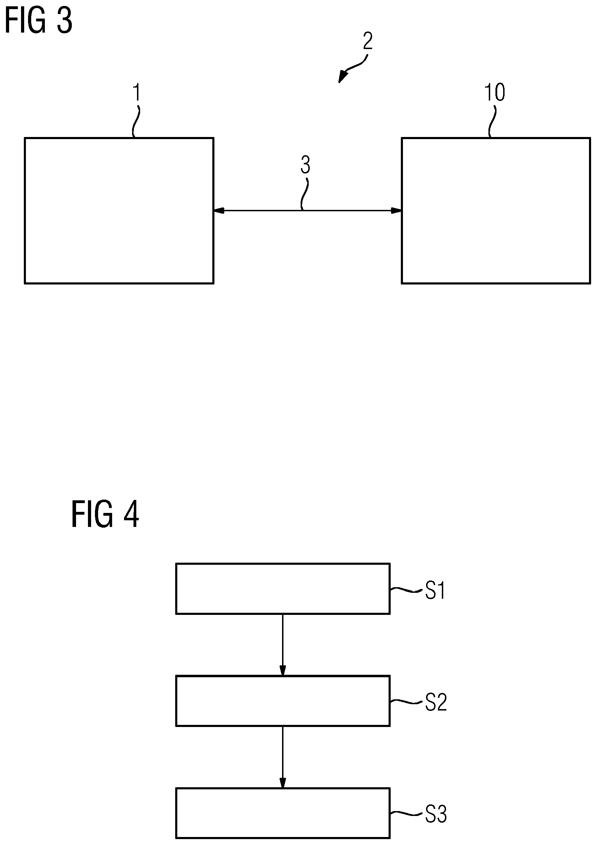

Fig. 3 zeigt ein schematisches Blockdiagramm eines Ausführungsbeispiels eines Systems 2 mit einer Prüfvorrichtung 10 gemäß der Fig. 1 und einem Web-Server 1.

Das System 2 umfasst den Web-Server 1, ein Netzwerk 3 und die Prüfvorrichtung 10. Der Web-Server 1 und die Prüfvorrichtung 10 sind über das Netzwerk 3 verbunden. Über das Netzwerk 3 können Daten zwischen dem Web-Server 1 und der Prüfvorrichtung 10 ausgetauscht werden. Der Web-Server 1 des Systems 2 ist zu der Prüfvorrichtung 10 extern.

Fig. 4 zeigt ein schematisches Ablaufdiagramm eines Ausführungsbeispiels eines Verfahrens zur Prüfung von Eigenschaften von Ressourcen eines Web-Servers 1.

Das Ausführungsbeispiel der Fig. 4 umfasst die Verfahrensschritte S1, S2 und S3.

In dem Schritt S1 wird einer eine bestimmte Ressource identifizierende Identifikator unter Verwendung der bestimmten Ressource berechnet.

Im Schritt S2 wird eine Lizenz-Pflicht für die bestimmte Ressource unter Verwendung des berechneten Identifikators festgestellt.

Weiterhin wird in dem Schritt S3 eine vorhandene Lizenz für den Web-Server 1 bei einer für die bestimmte Ressource festgestellten Lizenz-Pflicht unter Verwendung des berechneten Identifikators ermittelt.

Insbesondere sind die Berechnungs-Einheit 11, die Feststellungs-Einheit 12 und die Ermittlungs-Einheit 13 aus Fig. 1 dazu eingerichtet, die Verfahrensschritte S1, S2 und S3 gemäß Fig. 4 auszuführen.

Obwohl die vorliegende Erfindung anhand von Ausführungsbeispielen beschrieben wurde, ist sie vielfältig modifizierbar.

### Bezugszeichenliste

- 1: Web-Server
- 2: System
- 3: Netzwerk
- 10: Prüfvorrichtung
- 11: Berechnungs-Einheit
- 12: Feststellungs-Einheit
- 13: Ermittlungs-Einheit

- S1 - S3: Verfahrensschritte

## Patentansprüche

1. Prüfvorrichtung (10) zur Prüfung von Eigenschaften von Ressourcen eines Web-Servers (1), mit
einer Berechnungs-Einheit (11) zum Berechnen eines eine bestimmte Ressource identifizierenden Identifikators unter Verwendung der bestimmten Ressource,
einer Feststellungs-Einheit (12) zum Feststellen einer Lizenz-Pflicht für die bestimmte Ressource unter Verwendung des berechneten Identifikators, und
einer Ermittlungs-Einheit (13) zum Ermitteln einer vorhandenen Lizenz für den Web-Server (1) bei einer für die bestimmte Ressource festgestellten Lizenz-Pflicht unter Verwendung des berechneten Identifikators.

2. Prüfvorrichtung nach Anspruch 1,
**dadurch gekennzeichnet,**
**dass** die bestimmte Ressource als eine Datei ausgebildet ist, wobei die Datei als eine ausführbare Datei und/oder als eine Informationsdatei und/oder als eine Bilddatei ausgebildet ist.

3. Prüfvorrichtung nach Anspruch 1 oder 2,
**dadurch gekennzeichnet,**
**dass** die Berechnungs-Einheit (11) dazu eingerichtet ist, den die bestimmte Ressource identifizierenden Identifikator derart zu berechnen, dass der identifizierende Identifikator als Hashwert ausgebildet ist.

4. Prüfvorrichtung nach Anspruch 3,
**dadurch gekennzeichnet,**
**dass** die Berechnungs-Einheit (11) dazu eingerichtet ist, den Hashwert als den die bestimmte Ressource identifizierenden Identifikator über die bestimmte Ressource zu berechnen.

5. Prüfvorrichtung nach Anspruch 3 oder 4,
**dadurch gekennzeichnet,**
**dass** die Berechnungs-Einheit (11) dazu eingerichtet ist, die Berechnung des die bestimmte Ressource identifizierenden Identifikators mittels eines Distanz-Verfahrens zu berechnen, bei welchem eine Distanz zwischen durch die Berechnungs-Einheit (11) berechneten Hashwerten von Ressourcen berechnet wird.

6. Prüfvorrichtung nach einem der vorherigen Ansprüche,
**dadurch gekennzeichnet,**
**dass** die Prüfvorrichtung (10) dazu eingerichtet ist, die Prüfung der Eigenschaften von Ressourcen des Web-Servers (1) zu unterschiedlichen Zeitpunkten durchzuführen, wobei als ein Zeitpunkt die Prüfung bei einer Zugriffsanfrage erfolgt und/oder als ein weiterer Zeitpunkt die Prüfung zu einem festgelegten Zeitpunkt erfolgt und/oder als ein weiterer Zeitpunkt die Prüfung bei einem Gerätestart erfolgt und/oder als ein weiterer Zeitpunkt die Prüfung Ereignis getriggert erfolgt.

7. Prüfvorrichtung nach einem der vorherigen Ansprüche,
**dadurch gekennzeichnet,**
**dass** die Prüfvorrichtung (10) dazu eingerichtet ist, die Prüfung durchzuführen, falls die Zugriffsanfrage eines weiteren Web-Servers und/oder eines Clients auf die bestimmte Ressource erfolgt.

8. Prüfvorrichtung nach Anspruch 7,
**dadurch gekennzeichnet,**
**dass** die Prüfvorrichtung (10) dazu eingerichtet ist, die Prüfung durchzuführen, falls eine Anfrage des weiteren Webservers und/oder des Clients zum Aufbringen und/oder zum Speichern von der bestimmten Ressource auf den Webserver (1) erfolgt.

9. Prüfvorrichtung nach einem der vorherigen Ansprüche,
**dadurch gekennzeichnet,**
**dass** die Ermittlungs-Einheit (13) dazu eingerichtet ist, eine erste Aktion des Web-Servers (1) bei einer ermittelten vorhandenen Lizenz zu triggern und eine zweite Aktion des Web-Servers (1) bei einer ermittelten nicht-vorhandenen Lizenz zu triggern.

10. Web-Server (1) mit einer Prüfvorrichtung (10) nach einem der Ansprüche 1 bis 9.

11. Web-Server nach Anspruch 10,
**dadurch gekennzeichnet,**
**dass** die Ermittlungs-Einheit (13) dazu eingerichtet ist, eine erste Aktion des Web-Servers (1) bei einer ermittelten vorhandenen Lizenz zu triggern und eine zweite Aktion des Web-Servers (1) bei einer ermittelten nicht-vorhandenen Lizenz zu triggern,
wobei der Web-Server (1) dazu eingerichtet ist, die erste Aktion durchzuführen, wobei die erste Aktion eine Erlaubnis für einen Zugriff auf die bestimmte Ressource und/oder ein Aufbringen und/oder ein Speichern der bestimmten Ressource umfasst.

12. Web-Server nach Anspruch 11,
**dadurch gekennzeichnet,**
**dass** der Web-Server (1) dazu eingerichtet ist, die zweite Aktion durchzuführen, wobei die zweite Aktion ein Erteilen keiner Erlaubnis für einen Zugriff auf die bestimmte Ressource und/oder ein Löschen der bestimmten Ressource und/oder ein Sperren der bestimmten Ressource umfasst.

13. System (2) mit einer Prüfvorrichtung (10) nach einem der Ansprüche 1 bis 9 und mit einem zu der Prüfvorrichtung (10) externen Web-Server (1).

14. Verfahren zur Prüfung von Eigenschaften von Ressourcen eines Web-Servers (1), mit den Schritten:
Berechnen (S1) eines eine bestimmte Ressource identifizierenden Identifikators unter Verwendung der bestimmten Ressource,
Feststellen (S2) einer Lizenz-Pflicht für die bestimmte Ressource unter Verwendung des berechneten Identifikators, und
Ermitteln (S3) einer vorhandenen Lizenz für den Web-Server (1) bei einer für die bestimmte Ressource festgestellten Lizenz-Pflicht unter Verwendung des berechneten Identifikators.

15. Computerprogrammprodukt, welches auf einer programmgesteuerten Einrichtung die Durchführung des Verfahrens gemäß Anspruch 14 veranlasst.
